# EUROPEAN PATENT APPLICATION

(11) **EP 2 975 537 A1**
(43) Date of publication of application: **20.01.2016**
(21) Application number: 14472001.8
(22) Date of filing: 17.07.2014
(51) Int. Cl.: G06F 17/30

(54) **Merging multiple heterogeneous file systems into a single unified file system**

(71) Applicant: Tiger Technology AD, 1172 Sofia (BG)
(72) Inventor: Batzarov, Vesselin Ivanov, 1124 Sofia (BG); Lefterov, Alexander Asenov, 1320 Bankya (BG); Markov, Ivaylo Tsvetanov, 1715 Sofia (BG)
(74) Representative: Christov, Mario Nikolov

(57) **Abstract**

A method for exposing a single file system (unified file system) based on merging more than one file systems with different features and attributes (sub file systems). The features and attributes supported by the resulting unified file system are the least common denominator of the features of the sub file systems. During the mount of the unified file system all the sub file systems are queried for supported features and attributes. Based on the result the unified file system is constructed to support only functions and attributes that are supported across all sub file systems. The feature set of the unified file system is dynamic and is constructed every mount.

## Description

### FIELD OF THE INVENTION

The present invention relates to a method of creating and exposing a unified file system composed of multiple sub-file systems, the unified file system comprised of those features and attributes common to all of the multiple sub-file systems.

### BACKGROUND OF THE INVENTION

A file system is a software component of a computer operating system that controls the allocation of disk storage to a folder and folder structure used by applications running on the operating system to ensure data continuity and persistence. An example of traditional file systems spanning across multiple operating systems includes ext3, FAT, FAT32, NTFS, HFS+, XFS and ZFS. The traditional file system is created against a scheme of logical volume devices and physical disk devices. A logical volume device comprised of one or more physical disk devices. The layout of the data on the volume devices being dependent on the actual size of each volume. There are inherent deficiencies with this traditional file system scheme.

Data rates have increased exponentially. While the cost of storage has decreased, there are a very limited number of options which provide for resizing an existing store which is full. Some volume management systems support methods of extending existing volume devices with new physical disks and there are third party tools which resize traditional file systems to fit a larger volume device. However, these methods and third party tools all require taking the file system offline and performing lengthy and risky maintenance operations. In a large modern storage system, these maintenance operations can take days to complete.

Similarly, a large volume device containing unused physical space that would be better served on other volume device is limited by these same resizing restrictions. In other word, to free up the unused physical space from the large volume so it may be used elsewhere requires taking the file system on the large volume device offline and performing lengthy and risky maintenance operations which could take days to complete.

This resizing limitation associated with traditional file systems has its roots in the fact that a volume device cannot have a physical disk added or removed without reformatting the file system that is using that volume device. Reformatting of the file system usually involves moving data on the volume device out to a temporary storage which also can be a lengthy operation where large amounts of data are involved.

Concurrent with the exponential rise in data rates is the development of affordable newer and faster storage technologies. Vintage storage technologies cannot easily and safely be merged with these newer technologies. Rather, storage systems based on older technologies must be discarded and their data migrated to newer storage systems or data must remain on separate volumes based on different technologies. Storage system incorporating multiple separate volume leads to management and user access issues.

Although having a single repository for all data provides ease of use in any storage system configuration, there is an inherent problem with such a configuration. If the file system does become corrupt, the amount of possible data loss and the amount time associated with restoring the data through the rebuilding of the file system each increase along with the size of the file system. Although traditional file systems do provide some flexibility they are still limited in many respects. Thus, there still exists a need for various improvements to the traditional file system.

### DEFINITIONS

The following definitions are provided for convenience and are to be taken as a limitation of the present invention.

Logical Unit Number ("LUN"): a number assigned to a logical unit defined under the Small Computer System Interface ("SCSI"), the logical unit comprised of multiple black based physical disks.

Block Access: a method of accessing physical storage devices including a physical hard disk, flash memory and a LUN, as an array of equally sized blocks.

Block Device: a storage device which operates only through block access. The minimum amount a user can read from or write to a block device is one block. Each block device supports one or more specific block sizes, also know as that devices granularity.

Disk Device: operating system abstraction of a physical or SCSI device to a system. A disk device provides block access for reading and writing data.

Volume Device: operating system abstraction of a logical storage unit. A volume device provides block access for reading and writing data. A volume device uses one or more disk devices to store data thereby adding speed and redundancy to a storage system configuration.

File System: an operating system component responsible for handling logical I/O operations. File systems typically have a hierarchal structure comprised of folders and files and provide a range of features including keeping track of when a file is accessed, defining an owner for a file, providing for permission based access to the directories and files.

Metadata: attributes assigned to folder and files which are representative of the actual content of the files.

Unified File System: a file system that stores data across integrated sub-file systems.

Sub-file System: a file system that is used by a unified file system to store data. File System Features: a set of functions and limitation attributable to a file system. Limitations include maximum file name length, exclusion of certain characters from use in a file name. Functions include timestamps and journaling. File System Protocol: a set of functions used and structures used by an operating system to interact with a file system. A file system protocol is dependent on a particular file system's set of file system features.

Universal File System Protocol: the protocol used by a unified file system which is a super set of all supported file system protocols.

File Path: the general form of a file or directory name which specified a unique location in a file system.

### SUMMARY OF THE INVENTION

It is the primary purpose of the present invention to obviate the above problems by providing a unified file system comprised of multiple traditional sub-file systems having features and capabilities not currently available in traditional file systems.

To accomplish the above object, according to one aspect of the present invention, there is provided a logical layer based unified file system sitting above and comprised of multiple integrated block based sub-file systems is presented. The operating system of the unified file system communicates with the multiple operating systems of the integrated sub-file system so as to effectively present those features and capabilities common to all the operating systems of the integrated sub-files systems as accessible features and capabilities of the unified file systems. A primary purpose of the resulting feature set of the unified file system is to present multiple independent storage systems running on multiple integrated sub-file systems as a single unified logical file storage system. In the implementation of the unified file system, each integrated sub-file systems continue to provide block based I/O of metadata and data to their individual storage systems while simultaneously being logically merged under a single unified file system.

To accomplish the above object, according to another aspect of the present invention, there is provided CONFLICT RESOLUTION.

To accomplish the above object, according to another aspect of the present invention, there is provided PLUG-IN FUNCTIONALITY.

### INSERT CLAIM BASED DESCRIPTION.

In addition to the foregoing, other features, objects and advantages of the present invention will become apparent from the following description and appended claims.

### BRIEF DESCRIPTION OF THE DRAWINGS

The following detailed description, given by way of example and not intended to limit the present invention solely thereto, will best be appreciated in conjunction with the accompanying drawings, wherein like reference numerals denote like elements and parts, in which:
Figure 1 is a functional block diagram of a traditional file system's operating components within a computer operating system;
Figure 2 is a functional block diagram of the command structure between a unified file system and its component sub-file systems and
Figure 3 is a functional block diagram of how sub-file systems are integrated within a unified file system.

### DETAILED DESCRIPTION OF THE INVENTION

The present invention relates to a unified file system. FINISH THIS.

### DESCRIBE A SUB-FILE SYSTEM

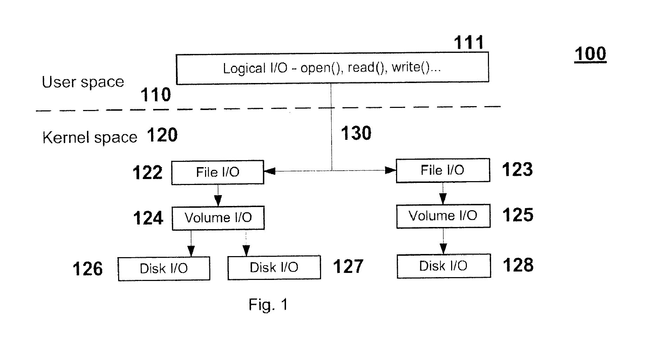

Fig. 1 of the accompanying drawings is a general functional depiction of a traditional file system which would be integrated as a sub-file system within the unified file system. Each sub-file system may be implemented on a variety of known operating systems including Windows, Apple OS, Linux and Unix.

As shown, an operating system 100 is functionally divided into a user space 110 and a kernel space 120. The user space 110 includes a logical I/O interface 111 which processes logical I/O calls to one or more file systems implemented within the kernel space 120. All logical I/O calls within the user space 110 are implemented through a native protocol 130 supported by the file systems implemented within the operating system 100. Typical I/O calls include such standard file system commands as open, read and write as well as any other call to an operation known to be implemented within a specific file system.

As shown, the kernel space 120 includes a first file system 122 and a second file system 123. Each file system controls the layout and internal links of the data files and corresponding metadata files on a volume device. Specifically, file system 122 controls access to a volume device 124 and file system 123 controls access to volume device 125. The metadata files include just information about corresponding data files as a data file's name, attributes, ownership and access permission.

Each volume device is comprised of one or more disk devices. As shown, the volume device 124 is comprised of a first disk device 126 and a second disk device 127 and volume device 125 is comprised of disk device 128. Each disk device represents a physical storage device consists of an array of equally sized blocks of binary data such as a hard disk, flash memory and CDROM. The purpose of the volume devices 124 and 125 is to hide from the user the complexity of the layout on the disk devices 126, 127 and 128, to provide redundancy and provide increased speed. Different strategies of combining physical disks into volume devices are used, the most popular being RAID0, RAID1 and RAID3.

### THIS SHOULD BE REFERENCED TO A DESCRIPTION OF DATA FLOW THOUGH THE UNIFIED FILE SYSTEM

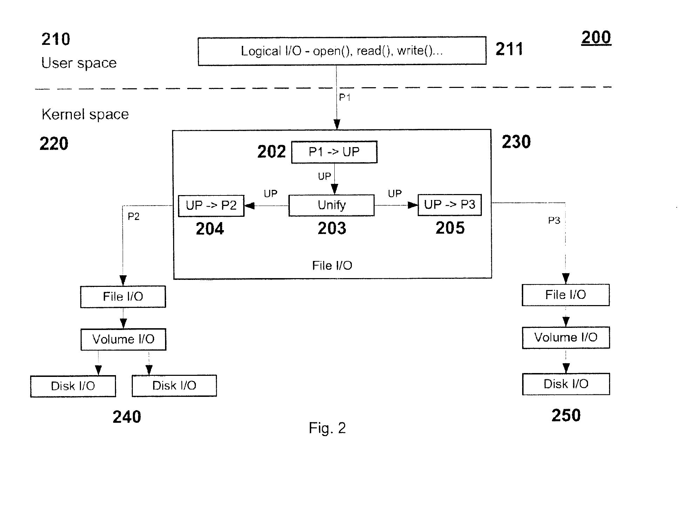

The unified file system is comprised of multiple sub-file systems, each sub-file system being a standard file system as described above. Fig. 2 is high-level block diagram showing one implementation of the unified file system of the present invention. As shown, a unified file system 300 is functionally divided into a user space 310 and a kernel space 320. The user space 310 including a logical I/O interface 311 and the kernel space 320 including a first sub-file system 340, a second sub-file system 350 and a file I/O module 330.

The user space 300 processes service request from the file systems through the logical I/O unit 311. The unified file system, itself being a file system to an operating system, exposes itself to the operating system within the user space 310 via a specific protocol (P1) 335. The protocol (P1) 335 is usually one of multiple protocols natively supported by the operating system running within the user space 310.

A service request originating from the user space 300 via the specific protocol (P1) is processed with the file I/O module of the kernel space 320. The unified file system internally coverts all specific protocol (P1) commands into a universal protocol commands (UP) 302. The rest of the operation logic of the unification process 303 is done over universal protocol (UP) commands thereby hiding the complexity of unifying files and directories from different sib-file system having different attributes.

The unification process 303 interacts with one or more sub-file systems through converter modules 332, 333 which convert universal protocol commands to a specific protocol that is native to a specific sub-file system. As shown, converter module 332 converts universal protocol commands (UP) targeted to sub-file system 340 to a specific protocol 341 that is native to the target sub-file system 340. Similarly, converter module 333 converts universal protocol commands (UP) targeted to sub-file system 350 to a specific protocol 351 that is native to the target sub-file system 340.

As can be seen from the above description of data flow through the unified file system, the universal protocol and the converter modules are integral elements of the unified file system.

### THIS SHOULD DESCRIBE THE UP

The universal protocol of the present invention must effectively express common file system operations while allowing for an arbitrary number of extensions and exceptions. The core functionalities of almost all modern file systems are basically identical consisting of creating, opening, deleting, reading and writing files and directories of files. However, each file system has unique file properties and unique protocol commands. The purpose of the universal protocol is to support all these attributes and commands without actually adding each specific method implementation to the protocol. The abstraction of those unique features and commands from the majority of modern file system provides for a universal protocol whose command structure is easily translated into a specific protocol that is native to a sub-file system.

As such, the universal protocol specifies a set of operations and data structures that are a super-set of most of those features present in existing file systems. Any existing file system can be controlled through this protocol, and an implementation of the protocol can be done over any existing file system. The protocol leaves up to the implementer weather a feature that is defined by the protocol, but not supported by the underlying file system should be unsupported or emulated with a feature that is close enough. For example, an implementation of the universal protocol on top of a NTFS file system can declare that it does not support object IDs (which are not present natively in the NTFS file system) or emulate them by assigning virtual IDs of files. This way the universal protocol creates a layer of abstraction that hides from the user of the protocol details of what features are supported by the underlying file system and how they are supported.

The universal protocol can be functionally divided into a base protocol component and an extension protocol component. The base protocol includes the basic operations and commands that each modern file system implementation must support. The base protocol is designed in a way that its implementation over an underlying file system is trivial and has almost no performance penalty. The base protocol also contains a method to inspect and implement extension to the base protocol.

The extension protocol components if the universal protocol can itself be divided into extended attributes extensions, file ID extensions and volume IO extensions. The extended attributes extensions provide for the association of an unlimited number of named attributes to a file system object, such as a folder or file. These extensions facilitate the storage and accessing of multiple file system specific attributes through a single generic interface.

For example if a native file system needs to support a specific attribute that is not defined within the base protocol, it can use a named attribute for that, and store it regardless of whether any specific sub file system has native support for that particular feature.

### THIS SHOULD DESCRIBE THE CONVERTER MODULES

In order to add support for a specific file system under the universal protocol, a converter module need to be implemented which converts universal protocol commands into the specific protocol native to the added file system. The design of the universal protocol itself matches as close as possible the specific protocols native to most modern file systems thereby allowing for an implementation, which does not have a significant performance overhead.

Moreover, to allow for performance optimization and to allow for support of unforeseen features, the universal protocol of the present invention provides for an extension mechanism, which allows the user to implement custom commands within the universal protocol. An example of such an extension is a function, which would bypass conversion to the universal protocol when the source and destination protocols are the same.

### DESCRIPTION OF PRESENTATION

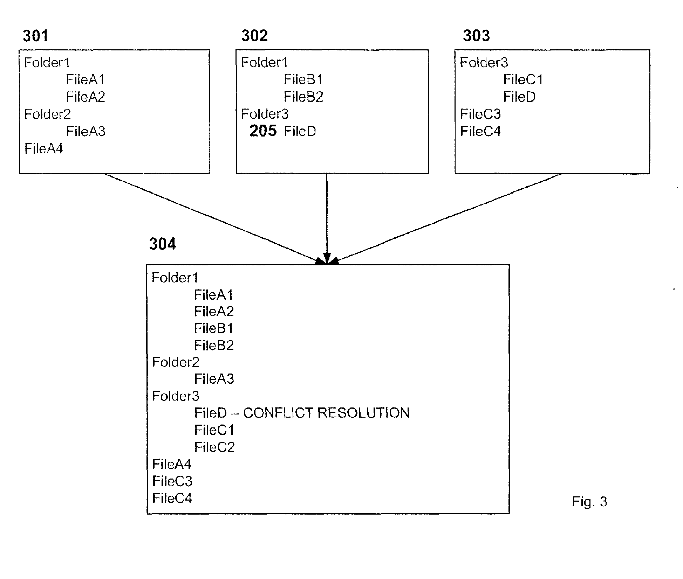

Fig. 3 is a functional block diagram of how sub-file systems are integrated within a unified file system. As shown, three sub-file systems merged into a unified file system. Specifically, the directory and file structures of sub-file system 301, sub-file system 302 and sub-file system 303 are merged under a single unified file system 304 presenting to the user a single unified directory and file structure.

The general rule for merging the sub file systems into a unified file system is that, if possible, the file path to any file is the same in the sub-file system and the unified file system. This is not possible only when there is a file with the exact same path on more than one of the sub-file systems. If this is the case, the unification mechanism must resolve the conflict, since there cannot exist two identical paths in the resulting unified file system. The unified file system allows for two general types of conflict resolution, the system resolves to shown only one of the files under the unified file system or the system resolves to shown all the files under the unified file system.

In the case where conflicting paths result in one path under the unified file system there must be consistent criteria by which one of the sub file system paths is associated with the single path in the unified file system. Examples of such criteria are "the last modified", "the first in sub file system order", "the biggest", etc.

In the case where the unified file path must provide access to all conflicting paths, it needs to make the paths unique by modifying the names of the files (which are part of the path). This is done by appending a unique string (per sub file system) to the end of the name. This string can be anything as long as it is guaranteed to be unique for each sub file system. The exemplary embodiment of the present invention uses GUID for that purpose.

## Claims

1. In a computer system having a native operating system and arbitrary number and type of file systems mounted a method for constructing a single unified file system which has the contents of all its sub file systems merged, and having the richest set of features possible (supported on all sub file systems). The method compromises of: inspecting each sub file system for features and attributes supported, determining the features and attributes that have to be supported by the unified file system, mounting the unified file system, merging the contents of the sub file systems (and resolving conflicts), passing file system calls to sub file systems based on the request and rules.

2. An operating system independent protocol, which is a super-set of all features and attributes of most file systems that is used to represent any file system operation in the method in claim 1.

3. A handshake procedure for the protocol in claim 2, which is used to determine the features and attributes supported.

4. A method for determining the feature and attribute set of the unified file system in claim 1 based on the sub file systems features and attributes. The resulting features and attributes set is not simply the least common denominator of the features and attributes of sub file systems, but also matches a native file systems features and attributes.

5. A merge and conflict resolution method for folders and files for the method in claim 1.
